# EUROPEAN PATENT APPLICATION

(11) **EP 4 733 750 A1**
(43) Date of publication of application: **29.04.2026**
(21) Application number: 24208596.7
(22) Date of filing: 24.10.2024
(51) Int. Cl.: G01N 23/20091, G01N 23/2206, G01N 23/2209

(54) **SYSTEM AND METHOD FOR X-RAY FLUORESCENCE SPECTROMETRY OF UNKNOWN SAMPLES**

(71) Applicant: Bruker AXS SE, 76187 Karlsruhe (DE)
(72) Inventor: Nitsche, Fabian, 76744 Wörth am Rhein (DE); Kessler, Jens, 76187 Karlsruhe (DE)
(74) Representative: Fleuchaus & Gallo Partnerschaft mbB

(57) **Abstract**

A computer-implemented method, computer program product and computing device (100) for determining a composition (C202) of an unknown sample (202) based on X-ray fluorescence spectrometry. An initial energy dispersive spectrum (EDX1) of the sample, obtained while an initial set (W1) of WDX measurements is ongoing, is used to determine a sample class (SC1) of the sample, and to derive one or more expected elements associated with the determined sample class. The device then retrieves optimized WDX measurement conditions (OWC1) associated with the expected elements, and provides the optimized WDX measurement conditions (OWC1) to a WDX channel (200-2) for performing a further set of WDX measurements using the optimized WDX measurement conditions (OWC1) with a focus on the one or more expected elements. The device then determines the composition (C202) of said sample (202) by using the points (WDX1-1 to WDX1-n, WDX2-1 to WDX2-m) measured via the WDX channel (200-2).

## Description

### Technical Field

The present invention generally relates to X-ray fluorescence spectrometry, and more particularly, relates to a method and to a system for determining the composition of a sample by using X-ray fluorescence spectrometry.

### Background

X-ray fluorescence spectrometry (XRF) is used to determine the composition of materials, comprising concentrations of compounds and/or thicknesses of layers, by irradiating a sample with x-rays and measuring the fluorescence radiation spectrum emanating from the sample. In more detail, determining composition of material as used herein relates to the measurement of concentrations of elements in bulk material as well as to measurements of material with layers and the respective thicknesses of such layers. There are two major detection methods: energy-dispersive (EDX) detection and wavelength-dispersive (WDX) detection.

While EDX is recording the spectrum in a wide energy range at once, WDX measures the spectrum sequentially energy after energy. Consequently, the EDX measurement is fast and less accurate while the WDX measurement is slower than the EDX measurement but also more accurate.

Further, quantification of the elemental composition of a sample from XRF spectra is subject to non-linear influences of one element on another (matrix effects), resonant scattering of crystalline samples (diffraction peaks) and preparation effects like grain boundary segregation or particle size effects (shadowing).

### Summary

There is therefore a need to provide XRF techniques which make use of the advantages of the known measurement techniques while reducing the above disadvantages. This is achieved in accordance with the claimed solution by combining the EDX and WDX techniques in that the EDX detection method is used to determine a qualitative composition or class of material for an unknown sample (i.e., a sample with unknown composition) which is then used to determine optimized WDX measurement conditions for subsequent, more detailed WDX measurement(s), in particular at sample specific goniometer positions of interest to save measurement time. Further, most of the non-linear influences, resonant scattering and preparation effects are material class specific and thus material class specific quantification models (calibrations) can mitigate these effects.

Embodiments of the herein disclosed approach include a method for X-ray fluorescence spectrometry of an unknown sample making use of a plurality of computer-implemented steps, and a computer system adapted to determine a composition of said sample based on EDX and WDX measurements wherein the EDX measurements affect the measurement conditions for the WDX measurements, as depicted by the independent claims.

In one embodiment, a method for X-ray fluorescence spectrometry of an unknown sample is provided. The method starts with irradiating the sample with radiation from an X-ray source. The interaction between the radiation and the sample results in fluorescence lines and scattered radiation being characteristic for elements contained in said sample. The resulting fluorescence lines and scattered radiation are measured by an X-ray fluorescence spectrometry system comprising an EDX channel (with an EDX detector) and a WDX channel (with a WDX detection system) which run their respective measurements in parallel. This does not imply that the EDX and WDX measurements need to start simultaneously but that the EDX measurement is obtained while the WDX measurements are ongoing.

The EDX channel is used to perform an initial EDX measurement for said sample to obtain an initial energy dispersive spectrum of the sample. The initial energy dispersive spectrum includes fluorescence contributions and scattering contributions of said sample.

In parallel, the WDX channel performs an initial set of WDX measurements for said sample to obtain one or more points of an initial wavelength dispersive (WDX) spectrum of the sample. Typically, a full WDX spectrum is obtained by stepwise changing the goniometer angle of the WDX channel over a full range of angles. The one or more points of the initial WDX spectrum are obtained at a few predefined goniometer angles. Thereby, the one or more points in the initial set of WDX measurements are points of interest for any sample which are known by a person skilled in the art, and for which the respective goniometer angles in combination with other parameter settings for the WDX channel are well known. Thereby, parameter settings for the WDX channel include settings for the WDX channel components which are located after the sample (detection side), such as collimator settings (distance of the plates which relates to angular acceptance), monochromator crystal settings (e.g., crystal type or, more general, net plane distance), detector settings and goniometer settings (goniometer angle affecting the selection of alternative lines, or the compensation of chemical shift). Such detection side parameter settings are part of the overall WDX measurement conditions which further include parameter settings for components of the X-ray fluorescence spectrometer that are located before the sample (excitation side), such as tube settings (tube voltage, tube current), and filter settings (filter material, filter thickness).

The initial EDX measurement takes less time than the initial set of WDX measurements. Therefore, the initial EDX measurement terminates earlier than the initial WDX measurements. In particular, if the two measurements start at substantially the same point in time, the EDX measurement terminates much earlier than the initial WDX measurements. Therefore, the EDX measurement can already be evaluated by a computing device while the initial set of WDX measurements is still ongoing. That is, while the initial set of WDX measurements is ongoing, the computing device determines a sample class of the unknown sample by feeding the initial energy dispersive spectrum as input to a first pretrained classifier being trained to provide sample classes from respective EDX spectra. The first classifier may be trained with annotated training data that are measured EDX spectra which have been annotated with a respective sample class as the ground truth. Thereby, the classifier learns to distinguish between different sample classes based on peak intensity distributions present in the respective training spectra. Further, the computing device derives one or more (most commonly) expected elements (i.e., elements expected to be present in the measured sample) associated with the determined sample class. For example, a database which stores for each sample class the respective expected elements (i.e., the elements which typically are contained in any sample of the determined sample class) may be queried by the computing device with the determined sample class to retrieve the associated expected elements.

Once the device has gained knowledge of the expected elements in the measured sample from the initial EDX measurement, it retrieves optimized WDX measurement conditions associated with the determined sample class, that is, the retrieved expected elements. A further database may store such optimized WDX measurement conditions for respective elements. Thereby, the optimized WDX measurement conditions may include optimized settings for any of the above-mentioned excitation side and/or detection side settings. For example, an optimized tube voltage in combination with an optimized goniometer angle may be particularly advantageous to measure said expected elements. The optimized WDX measurement conditions are then provided to the WDX channel. Once the initial set of WDX measurements is completed, the provided optimized WDX measurement conditions are applied to the WDX channel for appropriate settings to measure the derived expected elements.

That is, once the optimized WDX measurement conditions are applied, the WDX channel performs a further set of WDX measurements to obtain one or more points of a further wavelength dispersive spectrum using the optimized WDX measurement conditions with a focus on the one or more expected elements associated with the determined sample class (as determined via the initial EDX measurement).

The computing device then determines a composition of said sample by using the points measured via the WDX channel. This method allows to significantly reduce the time for the WDX measurements while still ensuring a high level of accuracy with regard to the composition result because the WDX channel only needs to perform WDX measurements in accordance with the optimized WDX measurement conditions at such energies which relate to the expected elements derived from the EDX measurement based on the determined sample class.

In one embodiment, in addition to the optimized WDX measurement conditions, the device may further retrieve optimized evaluation settings based on the determined sample class. Such optimized evaluation settings can then be used for determining the composition of said sample with an even improved accuracy.

In one optional embodiment, the method repeats the above-described measurements in a particular way. In this embodiment, the EDX channel performs a further EDX measurement to obtain a further energy dispersive spectrum in parallel to the further set of WDX measurements. That is, once the further set of WDX measurements has started with the optimized WDX measurement conditions obtained from the initial EDX measurement, the EDX channel is instructed to perform a further EDX measurement as well.

While the further set of WDX measurements is ongoing, the computing device now determines a sample sub-class of the unknown sample by feeding the further energy dispersive spectrum as input to a second pretrained classifier being trained to provide sample sub-classes from respective EDX spectra. It is to be noted that in general the classifiers for determining the sample class and for determining the sample sub-classes can be different classifiers which have been trained with different training data sets. However, it is also possible, to train a single classifier such that it is able to determine the sample class as well as the sample sub-classes. The computing device then derives one or more further expected elements associated with said determined sample sub-class (e.g., by querying the above-mentioned database which associates sample classes/sub-classes with respective elements).

In this embodiment, the computing device then retrieves further optimized WDX measurement conditions associated with the one or more further expected elements (associated with the determined sample sub-class) and provides the further optimized WDX measurement conditions to the WDX channel. Upon completion of the further set of WDX measurements, the WDX channel performs a still further set of WDX measurements based on the further optimized measurement conditions to obtain further one or more points of a still further wavelength dispersive spectrum using the further optimized WDX measurement conditions with a focus on the one or more further expected elements associated with the determined sample sub-class. In other words, when applying the further optimized WDX measurement conditions to the WDX channel, the setting of the WDX channel is optimized for measuring the one or more further expected elements associated with the determined sample sub-class.

In this optional embodiment, the computing device determines a composition of said sample by using all points measured via the WDX channel also including the points of the still further wavelength dispersive spectrum obtained with the further optimized WDX measurement conditions.

The method as described by the above optional embodiment may be further repeated one or more times with regard to the steps of determining a sample sub-class followed by retrieving further optimized WDX measurement conditions associated with the determined sample sub-class, and performing a respective additional set of WDX measurements (i.e., for further sample sub-classes) before the determination of the composition of said sample by the computing device.

A person skilled in the art may also provide the computing device with a function that is adapted to determine the sample composition by also making use of the measured energy dispersive spectra.

In one embodiment, a computer program product is provided for determining a composition of an unknown sample based on X-ray fluorescence spectrometry. The computer program comprises computer-readable instructions that, when loaded into a memory of a computing device and executed by at least one processor of the computing device, cause the computing device to execute the steps of the herein disclosed method which are performed by the computing device.

In one embodiment, a computing device is provided for determining a composition of an unknown sample based on X-ray fluorescence spectrometry. The computing device has a memory adapted to load the computer-readable instructions of said computer program product, and has one or more processors to execute these instructions. The computer readable instructions implement functional modules of the computing device which, at system runtime, perform the computer implemented steps of the herein disclosed method.

Further aspects of the invention will be realized and attained by means of the elements and combinations particularly depicted in the appended claims. It is to be understood that both the foregoing general description and the following detailed description are exemplary and explanatory only and are not restrictive of the invention as described.

### Brief description of the figures

FIG. 1 is a block diagram showing an embodiment of an X-ray fluorescence spectrometry apparatus communicatively coupled with a computing device adapted for determining a composition of an unknown sample according to an embodiment;
FIG. 2 is a flowchart of a method for X-ray fluorescence spectrometry of the unknown sample which can be performed by said apparatus in combination with said computing device;
FIG. 3 shows a swim lane diagram illustrating an example dataflow over time between EDX channel, computing device and WDX channel;
FIG. 4A shows an X-ray spectrum of an example Rhodium tube;
FIG. 4B shows an example X-ray spectrum of a sample containing 20 wt.-% Fe2O3 and 80 wt.-% SiO2;
FIG. 4C shows contributions to the example X-ray spectrum of a sample containing 20 wt.-% Fe2O3 and 80 wt.-% SiO2;
FIG. 4D shows an example of an energy dispersive spectrum of a sample containing 20 wt.-% Fe2O3 and 80 wt.-% SiO2;
FIG. 4E shows a full WDX spectrum of a sample containing 20 wt.-% Fe2O3 and 80 wt.-% SiO2 using three different crystals and the same angular scan range;
FIGs. 5A, 5B show three example class hierarchies for three sample classes and respective Classification Measurement Settings;
FIG. 6 illustrates a stacked autoencoder neural network (SAENN) structure for training a Neuronal Network; and
FIG. 7 is a diagram showing an example of a generic computer device and a generic mobile computer device, which may be used with the techniques described herein.

### Detailed description

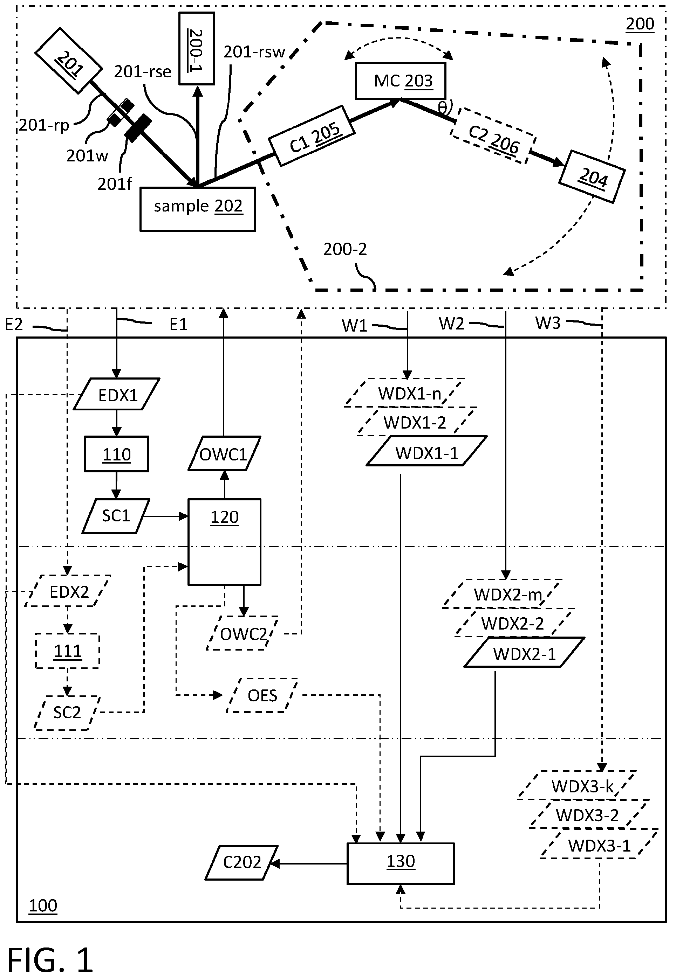

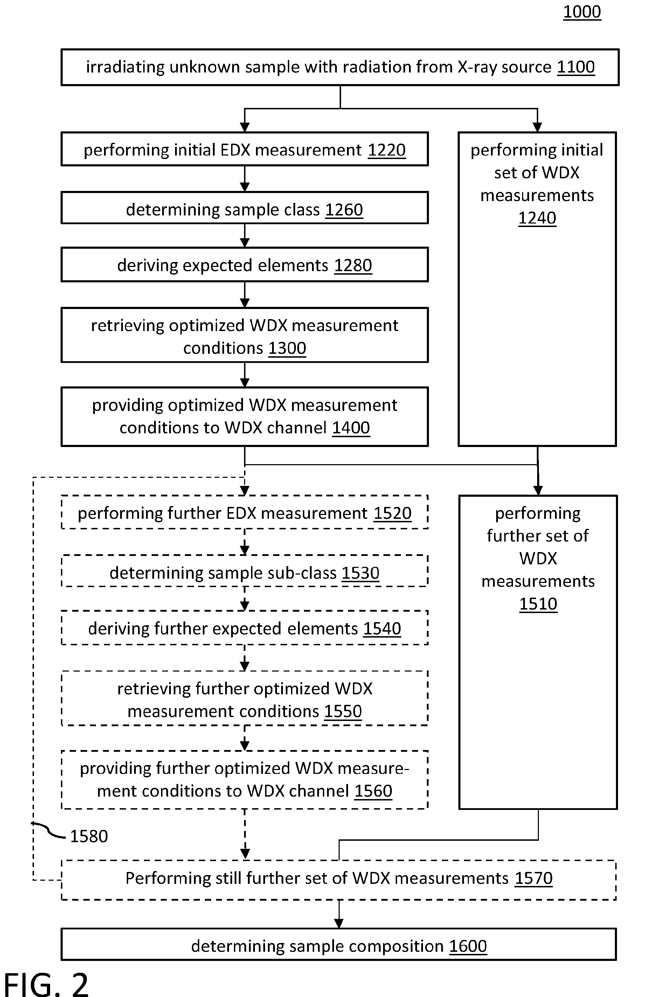

FIG. 1 is a block diagram showing an embodiment of an X-ray fluorescence spectrometry apparatus 200 which is communicatively coupled with a computing device 100 adapted for determining a composition C202 of an unknown sample 202 based on measurement results provided by the apparatus 200. FIG. 2 is a flowchart of a method 1000 for X-ray fluorescence spectrometry of the unknown sample 202 which can be performed by the apparatus 200 in combination with the computing device 100 of FIG. 1. Optional elements in the embodiments shown FIGs. 1, 2 are indicated by dashed frames. The communicative coupling of apparatus 200 and computing device 100 can be implemented via respective interface technology adapted to provide measurement results obtained by detectors 200-1, 204 of apparatus 200 to respective modules of computer system 100. In the following, the method 1000 of FIG. 2 is described in the context of the systems 100, 200 of FIG. 1 and reference numbers of both figures are used by the description without explicit reference to the respective figures.

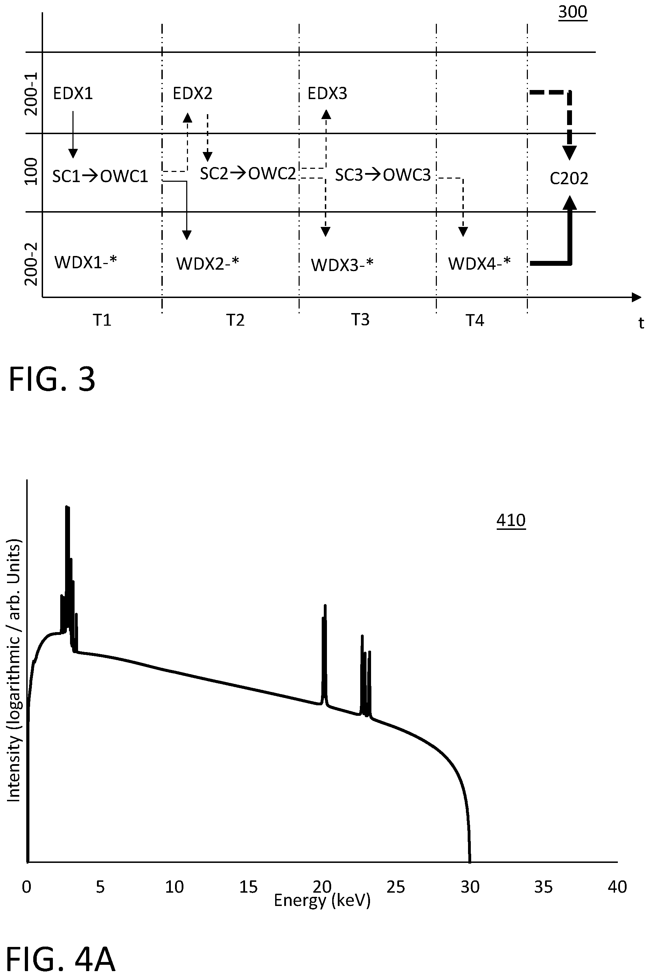

Apparatus 200 for X-ray fluorescence spectrometry of the unknown sample 202 includes an EDX channel 200-1 and a WDX channel 200-2 allowing the apparatus to measure energy-dispersive and wavelength-dispersive spectra of the same sample in parallel. The sample 202 is irradiated 1100 with radiation 201-rp from an X-ray source 201. The interaction between the radiation and the sample results in fluorescence lines and scattered radiation being characteristic for elements contained in said sample 202. In other words, the X-ray fluorescence spectrometer has an X-ray tube 201 that generates primary radiation 201-rp irradiating the sample. The primary radiation generated in an X-ray tube typically comprises characteristic lines of the anode material (e.g., Rhodium) and the Bremsstrahlung which is a continuous contribution with a maximum energy at the excitation voltage applied to the electrons in the X-ray tube. FIG. 4A shows an X-ray spectrum 410 of an example Rhodium tube using 30 kV as acceleration voltage.

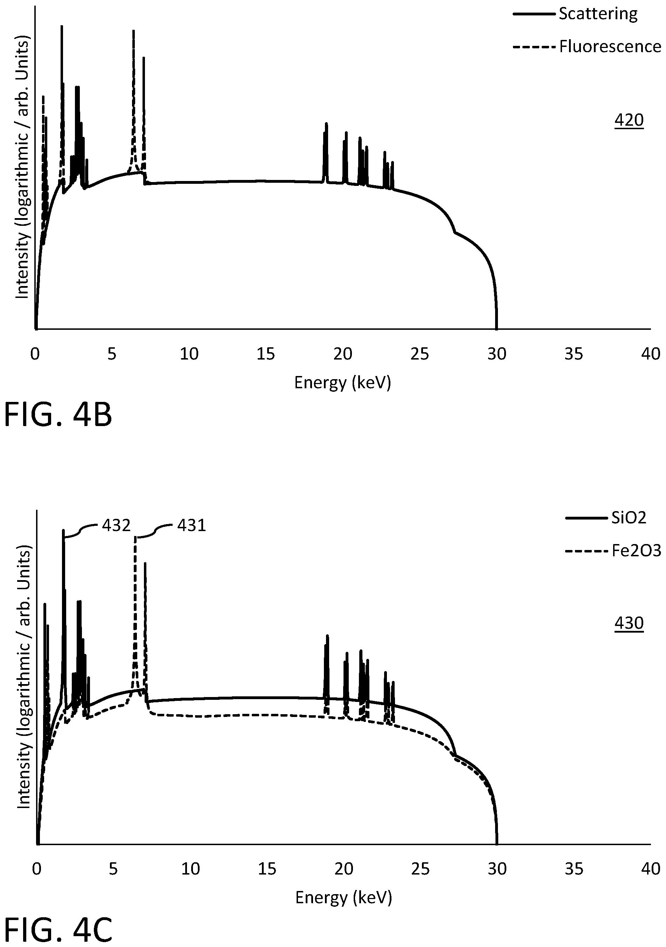

The sample 202 generates secondary radiation 201-rsw, 201-rse, each consisting of fluorescence and scattered radiation that is detected by a wave-length dispersive detector 204 (in WDX channel 200-2) and an energy dispersive detector (in EDX channel 200-1), respectively. In the embodiment in FIG. 1, primary radiation 201-rp passes a tube window 201w and a filter 201f before hitting the sample 202. For example, filter 201f may be a thin foil to modify the primary radiation 201-rp. Filter and tube window are typically used in X-ray fluorescence spectrometry but are not essential components of apparatus 200. FIG. 4B shows an X-ray spectrum 420 of a sample containing 20 wt.-% Fe2O3 and 80 wt.-% SiO2 irradiated by the tube spectrum of FIG. 4A. The interaction of the tube primary radiation with the sample results in fluorescence lines (dashed line) that are characteristic for the elements in the sample and their intensity can be correlated to the composition of the sample. Additionally, the sample scatters (solid line) the primary radiation elastically (Rayleigh) and inelastically (Compton).

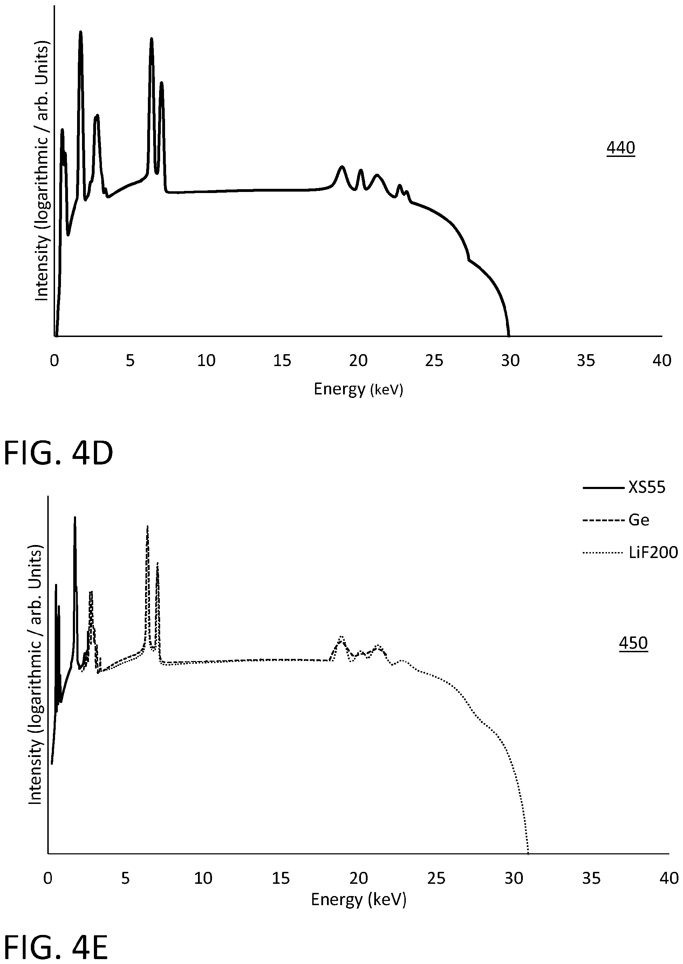

Further, the EDX channel may use an attenuator or filter (not shown) in front of the EDX detector. Once the sample 202 is irradiated, the EDX channel and the WDX channel can perform respective measurements in parallel of the secondary radiation 201-rse, 201-rsw which is emitted by the sample in the respective directions. The EDX channel uses an energy dispersive detector that allows to record the whole spectrum from the sample in a short time interval compared to the time required by the WDX channel. The tradeoff however is that the spectrum gets blurred, i.e., the peaks are broadened. FIG. 4D shows an example of an energy dispersive spectrum 440 of a sample containing 20 wt.-% Fe2O3 and 80 wt.-% SiO2. There would be additional artifacts in the spectrum 440 that are generated by the detector like pile-up of the EDX detector, escape, tail and shelf which are, however, not included in in FIG. 4D for clarity. The broadening of the peaks and the additional artifacts lead to more overlaps of the fluorescence lines and, finally, to less accurate determination of the sample composition.

A person skilled in the art knows the functioning of the WDX channel. Therefore, only a short description of the core components of the WDX channel is given. Typically, the secondary radiation 201-rsw passes a collimator C1205 and is then diffracted at monochromator MC 203 under diffraction angle θ towards WDX detector 204. Optionally, a second collimator C2 206 may be used between MC 203 and detectors 204. The WDX channel uses a detector 204 with poor energy resolution and a monochromator MC 203 (typically a crystal) to select one energy at a time with a high energy resolution. For that, a goniometer adjusts the angle θ of the beam coming from the sample 202 through the primary collimator C1 205 to the monochromator 203 and the angle θ of the beam going from the monochromator through the secondary collimator C2 206 to the detector 204 in such a way that the Bragg condition (constructive interference) is fulfilled. Consequently, a scan (typically including a number of single measurements in the order of 5000) over 2θ (angle between incoming and outgoing beam at the monochromator) is necessary to obtain a full WDX spectrum of the sample. This is time consuming, and one monochromator does not suffice to capture the full energy range. Thus, the angle scan is to be repeated for multiple crystals, still adding to the overall measurement time. FIG. 4E shows such a full WDX spectrum 450 of a sample containing 20 wt.-% Fe2O3 and 80 wt.-% SiO2 using three different crystals (XS55, Ge, LiF200) and the same angular scan range (here plotted in energy scale for comparison). In spectrum 450, artifacts generated by the WD detection system, like higher order peaks, crystal fluorescence and efficiency differences, are left out for clarity. The advantage of WDX over EDX is that one can get very high resolution and count rate for the peaks with the tradeoff that measurement of a full spectrum takes a lot of time and the measurement setup gets more complicated, since monochromator and collimator must also be selected. Due to the duration for a scan, WDX is mainly used to measure single points of the X-ray spectrum, e.g., one at a peak of a fluorescence line and one right next to it for the background intensity.

In summary, the EDX channel yields the full spectrum in a short time while the WDX channel yields good signal separation and signal to noise ratio for single points. Consequently, in a combined system, EDX is good for a qualitative and WDX is good for a quantitative analysis - EDX is simple but less accurate and WDX is complicated but more accurate.

The apparatus 200 performs 1220 an initial EDX measurement E1 for said sample to obtain an initial energy dispersive spectrum EDX1 of the sample via the EDX channel 200-1, and performs in parallel 1240 an initial set W1 of WDX measurements for said sample to obtain one or more points WDX1-1 to WDX1-n of an initial wavelength dispersive spectrum of the sample via the WDX channel 200-2. The initial energy dispersive spectrum EDX1 includes fluorescence contributions and scattering contributions of said sample. The one or more points obtained from the initial set of WDX measurements are so-called points of interest for any sample. That is, the initial WDX measurements are performed with a configuration of the WDX channel which can always be used for any unknown sample to obtain such general points of interest. It is to be noted that the initial set of WDX measurements may also include just a single measurement result WDX1-1. All measurement results of apparatus 200 are provided to the computing device 100 in real-time. The term "real-time" as used throughout this document is understood by a person skilled in the art of digital data processing as "near real-time" or "quasi real-time". Any digital data processing step (e.g., an image processing step) applied to data captured from the real world (e.g., detector data to be transferred into spectra) always results in a delay imposed by the digital data processing steps. For convenience, only the term "real-time" will be used throughout this document when referring to such "near real-time" behavior of the disclosed methods and systems.

While the initial set W1 of WDX measurements is ongoing, computing device 100 determines 1260 a sample class SC1 of the unknown sample 202 by feeding the initial energy dispersive spectrum EDX1 as input to a first pretrained classifier 110. Classifier 110 has been trained to provide sample classes from respective EDX spectra, and to derive 1280 one or more expected elements associated with the determined sample class SC1. For example, classifier 110 may be implemented by a classification neural network or another classifier technology (e.g., compositional similarity search in a database) which has been trained to determine a class of sample 202 (e.g. Geological, Metal, Plastic) based on the initial energy dispersive spectrum EDX1.

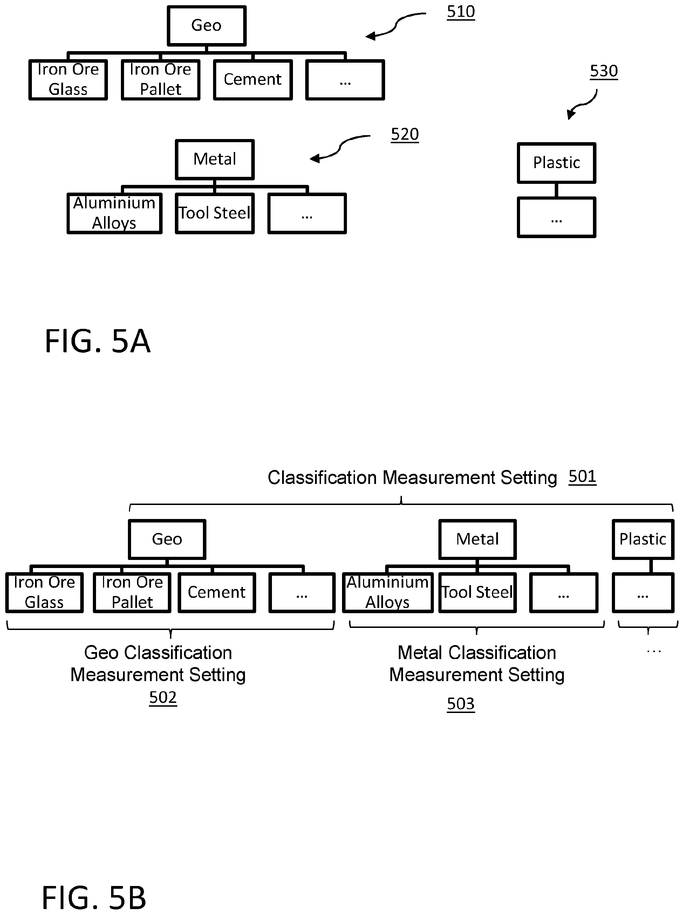

For training an artificial intelligence model, such as classifier 110, supervised learning may be used with training data that is labelled accordingly. For example, for each Classification Measurement Setting 501, 502, 503) (cf. brackets in FIG. 5B), many EDX measurements with the respective Measurement Setting of many samples that represent, for example, Geo, Metal, Plastic, etc. classes with known ground truth (label) are used. Ideally, the training data are perturbated to prevent bias of the model.

EDX spectra of any sample composition and measurement setting can be simulated. Therefore, vast numbers of labeled training data sets (EDX spectra) can be automatically generated which correspond to EDX spectra for a vast number of representative samples (cf. V. Andric, G. Kvascev, M. Cvetanovic, S. Stojanovic, N. Bacanin, and M. Gajic-Kvascev, Deep Learning Assisted XRF Spectra Classification, Sci. Rep. 14, 3666 (2024)). Also, the perturbation of such data to generate additional data sets is known in the art.

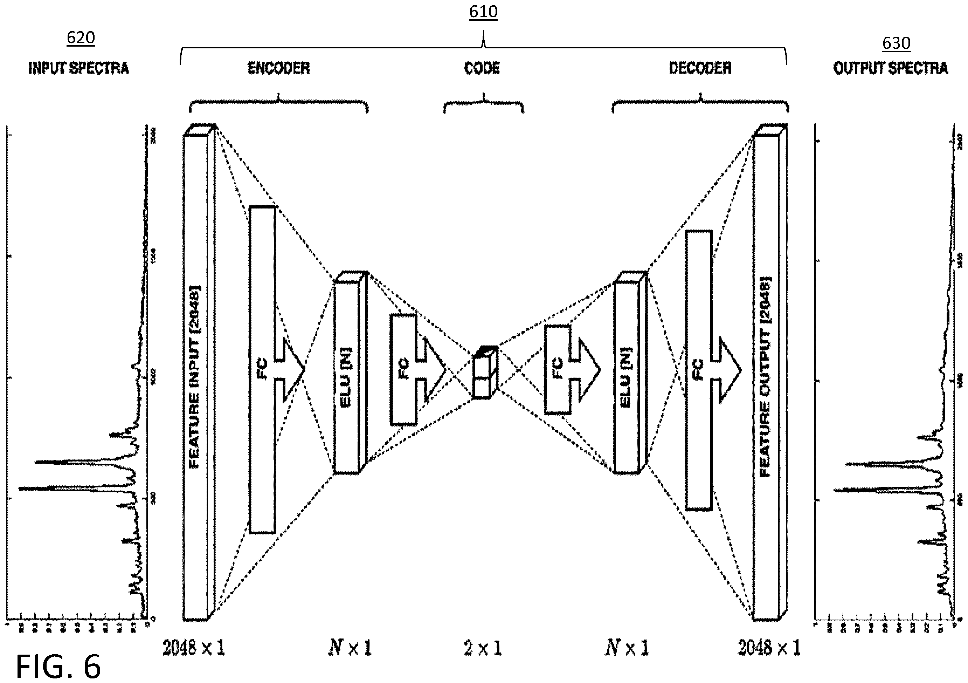

FIG. 6 illustrates a stacked autoencoder neural network (SAENN) structure for training a neural network (cf. M. Dirks and D. Poole, Auto-Encoder Neural Network Incorporating X-Ray Fluorescence Fundamental Parameters with Machine Learning, X-Ray Spectrom. 52, 142 (2023)). To avoid teaching the neural network wrong information, the training data spectra can be perturbated, e.g., by changing the level of noise or slightly changing the position of a respective spectrum. The training data may also be preprocessed by domain knowledge. For example, the background can be subtracted from the spectra by other methods, the peak width can be equalized, etc.

Typically, the training data is separated into a training and validation data set with an optional additional set of labeled measured spectra to check the final quality of the trained neural network. Typically, the teaching of the neural network can be separated into a dimension reduction and a fully connected network to do the classification. The dimension reduction is often an unsupervised machine learning step, where e.g., an autoencoder 610 tries to reproduce the input spectrum 620 as output 630 of the autoencoder while reducing the information in the process. This can also be combined with Convolutional Neural Networks to allow learning of spectrum typical features. After the unsupervised learning phase, the decoder part (right side of autoencoder 610) is thrown away and the "code" (i.e., the reduced information) is connected to a fully connected (deep) neural network. This combined neural network is then trained with the synthetic (simulated) labeled spectra using supervised learning.

Training strategies may include:
- Bagging (bootstrap aggregating): a method where the training data is separated into multiple sets (bootstrapping) and the neural network is trained for each set. the resulting neural network parameters are e.g., averaged (aggregating).
- Pruning: Remove neurons that do not significantly impact the prediction accuracy of the network from it.
- Hyperparameter optimization: Find the optimal size and architecture of the neural network.
- Meta learning: Adjustment of a subset of parameters to account for differences between devices

Turning briefly to FIG. 5A, three example class hierarchies 510, 520, 530 are shown. The top node of each hierarchy corresponds to a possible classification result determined by classifier 110 based on the initial EDX spectrum. For example, class Geo in class hierarchy 510 relates to geological samples which consist mostly of oxides of various elements. Such geological samples are typically molten together with borates to form glasses for better homogeneity and more stable analytical results. However, they may be also pressed together with wax, which is easier (when pressing with wax, the sample only needs to be finely ground, mixed with the wax and pressed so that preparative effort is correspondingly lower when pressing) and retains the oxidation state of the elements in the sample. Geological samples typically include high concentrations of Al, Si, and Ca. Class Metal in class hierarchy 520 relates to metal samples that are often cast from the mold and have high concentrations of one transition element or aluminum. Class Plastic in class hierarchy 530 relates to plastic materials that are often measured for trace analysis to monitor, for example, heavy elements or sulfur and chlorine. However, light element (carbon, nitrogen, oxygen, hydrogen) compounds of plastic samples can only be determined indirectly by analyzing the scattered tube spectrum. Still, these compounds have a high impact on the analysis of the other elements. The top node classes can still be further divided into subclasses as shown in FIG. 5A. For example, the class Geo in hierarchy 510 can be divided into:
- Sub-class Iron Ore Glass relating to samples where the iron ore was heated together with borate and an oxidizer to get a homogenous sample. The overall element concentrations are low due to the dilution with borate but the spectrum is still dominated by the iron fluorescence lines. Of typical interest is a reliable iron and sulfur analysis.
- Sub-class Iron Ore Pressed Pellet relating to samples where the iron ore was not heated up and oxidized. Such samples contain only little wax and the overall element concentrations are high, with a high iron signal. This is also of interest for reliable iron and sulfur analysis or iron oxidation state determination.
- Sub-class Cement relating to samples that are typically glass samples with high calcium content.
- And further sub-classes known by a person skilled in the art.

The class Metal in hierarchy 520 can be divided into:
- Sub-class Aluminum-Alloys related to samples that have a high concentration of aluminum. However, in many cases the interest is in the concentrations of accompanying elements.
- Sub-class Tool-Steel related to alloys that have a significant tungsten concentration next to a very high iron concentration. In many cases, the interest is in a very good tungsten analysis.
- Further sub-classes known by a person skilled in the art.

Each class or sub-class is therefore associated with one or more expected elements which are expected to be contained in the sample in measurable concentrations.

Turning briefly to FIG. 3, swim lane diagram 300 illustrates a dataflow over time t between the EDX channel 200-1, computing device 100 and WDX channel 200-2. During time interval T1, the initial EDX and WDX measurements E1, W1 are run in parallel. The EDX channel provides the initial energy dispersive spectrum EDX1 to device 100. As EDX measurements are performed much faster than WDX measurements for a plurality of points of a WDX spectrum, EDX1 is available at device 100 already well before the initial set of WDX measurements is completed by the WDX channel. Hence, while this initial set of WDX measurements is still ongoing in the WDX channel, the device 100 can already determine sample class SC1 of the unknown sample 202 based on the initial energy dispersive spectrum EDX1. Also, advantageously before completion of the initial set W1 of WDX measurements, the device 100 retrieves 1300 optimized WDX measurement conditions OWC1 associated with the one or more expected elements of the determined sample class SC1. A measurement condition retrieval module 120 is adapted to firstly retrieve the expected elements associated with the determined sample class SC1. For example, a respective database or lookup table may be queried by module 120 to identify the expected elements associated with SC1. A further database or lookup table may then provide WDX measurement conditions OWC1 which are optimized for the identified expected elements. Such databases/lookup tables may be an integral part of module 120 or may be stored at a remote storage location accessible by module 120.

For example, an unknown sample (of an iron ore) is measured with 30 kV and no filter on the EDX channel to get an initial (full) EDX spectrum EDX1. In parallel, the peak and background points for the Compton scattered tube line are measured with the WDX channel.

Classifier 110 determines the class "Geo" for the unknown sample. Module 120 identifies Silicon as expected element (as it is contained in all geological samples), and further retrieves an acceleration voltage of 20 kV as optimized WDX measurement conditions for the WDX channel 200-2 for obtaining measurements with a focus on Silicon.

The optimized WDX measurement conditions OWC1 are then provided 1400 to the WDX channel 200-2. The optimized WDX measurement conditions OWC1 may already be provided during T1 while W1 is still ongoing in case the WDX channel has a respective buffer for storing OWC1 until needed for a reconfiguration of the WDX channel, or they may be provided upon completion of the initial set W1 of WDX measurements (as shown in FIG. 3) for obtaining the one or more points WDX1-* of the initial wavelength dispersive spectrum of the sample. In the example with expected element Silicon, the acceleration voltage of tube 201 is changed to 20 kV. It is to be noted that although in FIG. 1, tube 201 is not explicitly shown as being part of the EDX and WDX channels, of course tube 201 forms part of both channels because without the primary radiation 201-rp generated by tube 201 no measurements at all could be performed by the two channels. That is, the optimized WDX measurement conditions OWC1 may be related to settings of any of the components within the dash-dotted WDX channel frame 200-2, but may also be related to tube 201 and/or the tube associated elements 201w, 201f.

To obtain optimized WDX measurement conditions for later retrieval by module 120, for each class or sub-class, multiple samples of known composition (i.e., reference materials / standards) can be measured. These measurements can then be used to optimize the measurement settings to respective (e.g., customer) needs. A calibration can be calculated by regression using these optimized measurement settings to obtain evaluation settings which are again optimal for the respective needs. Thus, a relation of each class/sub-class to their individual WDX measurement settings and evaluation settings can be obtained. The synergy of EDX and WDX measurements can be maximized for the measurement of an unknown sample by using the quick EDX measurement to allow the slower WDX channel to measure just the positions required by the determined class/sub-class with optimized measurement settings. In this way, the total measuring time required is reduced as much as possible without compromising the quality of the result.

Upon completion of the initial set W1 of WDX measurements, apparatus 200 performs 1510 a further set W2 of WDX measurements via the WDX channel 200-2 to obtain one or more points WDX2-1 to WDX2-m (WDX2-*) of a further wavelength dispersive spectrum using the optimized WDX measurement conditions OWC1 with a focus on the one or more expected elements associated with the determined sample class SC1. With regard to the Silicon example, the WDX channel starts a measurement of the Si KA peak point and background point with the changed acceleration voltage. The further set W2 of WDX measurements is performed during time interval T2 (cf. FIG. 3). At the end of T2, device 100 has received the WDX measurement points WDX1-* (captured from W1) and WDX2-* (captured from W2).

After the WDX point measurements W1, W2 are finished, a composition module 130 determines 1600 a composition C202 of sample 202 by using the points WDX1-*, WDX2-* measured via the WDX channel 200-2. A person skilled in the field of X-ray spectroscopy knows how to determine sample compositions based on WDX measurement results. Because of the second set of points WDX2-* obtained under optimized WDX measurement conditions with regard to the expected elements derived from the initial EDX measurement EDX1, the determined composition C202 represents a value of high accuracy obtained in a relatively short time interval (T1+T2). It is to be noted that the accuracy may further be improved when composition module 130 also takes into account the initial EDX spectrum EDX1 for determining the sample composition.

In an optional embodiment, determining 1600 the composition C202 may also use optimized evaluation settings EOS which are retrieved by module 120 based on the determined sample class SC1 to, for example, correct for systematic errors introduced by the sample preparation. For example, for the sample classes "cement glass" and "cement wax", different sensitivities (conversion factor between intensity and concentration) for the lighter elements like aluminum and silicon may be provided due to preparation effects like particle size effects, that are present in the wax pallet but not in the glass sample. Besides such preparation effects, other effects that may be addressed are overlaps, diffraction peaks and higher order matrix effects (e.g. tertiary fluorescence).

FIG. 4C shows contributions to the X-ray spectrum of a sample containing 20 wt.-% Fe2O3 and 80 wt.-% SiO2 irradiated by the tube spectrum of FIG. 4A.

To quantify the mass fraction (wt.-%) of an element or compound, the fluorescence intensities (dashed line) of one or more of the characteristic lines of an element specific to the compound are used, e.g., the Fe-KA line 431 for Fe2O3 and the Si-KA line 432 for SiO2 (the peaks with the highest intensity). The scattered Bremsstrahlung (solid line) is background and needs to be subtracted.

Especially for low mass fractions of an analyte, this background may interfere with the fluorescence lines quite a lot and can cause problems due to statistics (e.g., a high limit of detection). However, the Bremsstrahlung is also an important part of the excitation of high energy fluorescence lines. Additionally, fluorescence lines of other elements can overlap with the fluorescence line of interest, necessitating the use of different fluorescence lines for the element of interest, like the KB or L lines

Consequently, optimized excitation settings are different for different elements and samples. For example, 60 kV acceleration voltage with a 250 micron copper foil (cf. FIG. 1, filter 201f) between tube and sample can be used to get good excitation of iron while reducing the Bremsstrahlung background in the region of the Fe-KA line. 30 kV acceleration voltage and no foil between tube and sample can be used to get the best excitation of silicon with the drawback that the Bremsstrahlung background will still be high. The combinations of acceleration voltage and filters having different material and thickness are vast and very specific to the analytical requirements. However, the scattering also contains information about the sample composition, since the scattering properties of each element are different. Especially for light elements, where either no X-ray fluorescence lines exist or are not measurable, the scattering of the tube spectrum on the sample is the only source of information. In the above picture, the contribution of Fe2O3 on the scattering is much smaller than the SiO2 contribution.

In an optional embodiment, apparatus 200 further performs 1520, in parallel to the further set W2 of WDX measurements, a further EDX measurement E2 to obtain a further energy dispersive spectrum EDX2 of the sample via the EDX channel 200-1. Of course, the further EDX measurement E2 is also obtained with the optimized WDX measurement conditions OWC1. In the example, E2 is obtained with an acceleration voltage of 20 kV whereas E1 was obtained at 30 kV. Hence EDX2 differs from EDX1 and, therefore, provides additional information about the sample to the computing device 100.

While the further set W2 of WDX measurements is ongoing, a second pretrained classifier 111 of device 100 determines 1530 a sample sub-class SC2 of the unknown sample based on the further energy dispersive spectrum EDX2 as input. The second pretrained classifier 111 has been trained to provide sample sub-classes from respective EDX spectra. It is to be noted that the classifiers 110 and 111 may also be implemented in a single classifier which has been trained to determine sample classes and sub-classes. In the example, the sample sub-class SC2 is determined as iron sulfide/sulfate ore.

Module 120 then derives 1540 one or more further expected elements associated with the determined sample sub-class SC2. In the example, a high concentration of sulfur and iron is expected in accordance with EDX2. Module 120 further retrieves 1550 further optimized WDX measurement conditions OWC2 associated with the one or more further expected elements associated with the determined sample sub-class SC2. In the example, OWC2 includes parameter settings to measure additional points by the WDX channel after the Si-KA points optimal for an iron sulfide/sulfate ore analysis, e.g., the S-KA line is also measured at the same excitation settings as the Si-KA points. That is, the angle θ of MC 203 is adjusted such that it fits the S-KA line. Besides the WDX parameter settings for the sulfide/sulfate elements, OWC2 includes a second set of WDX parameter settings to focus the WDX channel on the measurement of iron, nickel and other transition metal elements which often accompany iron in its ores. This second set of WDX parameters switches the tube acceleration voltage to 50 kV and uses a 100-micron copper filter as filter 201f. These further optimized WDX measurement conditions OWC2 are then provided 1560 to the WDX channel 200-2 either during interval T2 or at the end of T2.

Upon completion of the further set W2 of WDX measurements, apparatus 200 then performs 1570 a still further set W3 of WDX measurements based on the further optimized measurement conditions OWC2 during timer interval T3 to obtain further one or more points WDX3-1 to WDX3-k (WDX3-*) of a still further wavelength dispersive spectrum using the further optimized WDX measurement conditions OWC2 with a focus on the one or more further expected elements associated with the determined sample sub-class SC2. In this embodiment, module 130 also takes into account WDX3-* to determine 1600 the composition C202 of sample 202. Further, module 130 may also take into account the energy dispersive spectrum EDX2 for determining C202. As set W2 of WDX measurements is performed with two different parameter subsets of the further optimized measurement conditions OWC2, WDX3-* points for these two parameter subsets are obtained in two phases during T3. In the example, firstly the points for the S-KA line are obtained at the respective θ angle(s), then the tube configuration is changed to obtain the points regarding iron, nickel and other transition metal elements. In general, in cases where a determined sample class or sub-class is associated with more than one expected element, there may be multiple phases of the following WDX measurement to obtain corresponding points for the associated subsets of parameters for optimized WDX measurement conditions in relation to each of the expected elements. That is, a single EDX spectrum may lead to the retrieval of optimized WDX measurement conditions which include multiple parameter settings for WDX channel associated with multiple expected elements identified via the EDX spectrum.

The iteration performed by the previously described optional embodiment can be further repeated in that the steps for determining a sample sub-class followed by retrieving further optimized WDX measurement conditions associated with one or more further expected elements associated with the determined sample sub-class, and performing a respective additional set of WDX measurements, are repeated 1580 one or more times before the determination of the composition of said sample. In FIG. 3, during T3, a third EDX spectrum EDX3 is obtained via the EDX channel in parallel to the set W3 of WDX measurements. Based EDX3 optimized WDX measurement conditions OWC3 are retrieved and provided to the WDX channel to obtain points WDX4-*. The composition module 130 may then determine the sample composition C202 by also taking into account WDX4-* (and also EDX3 if appropriate).

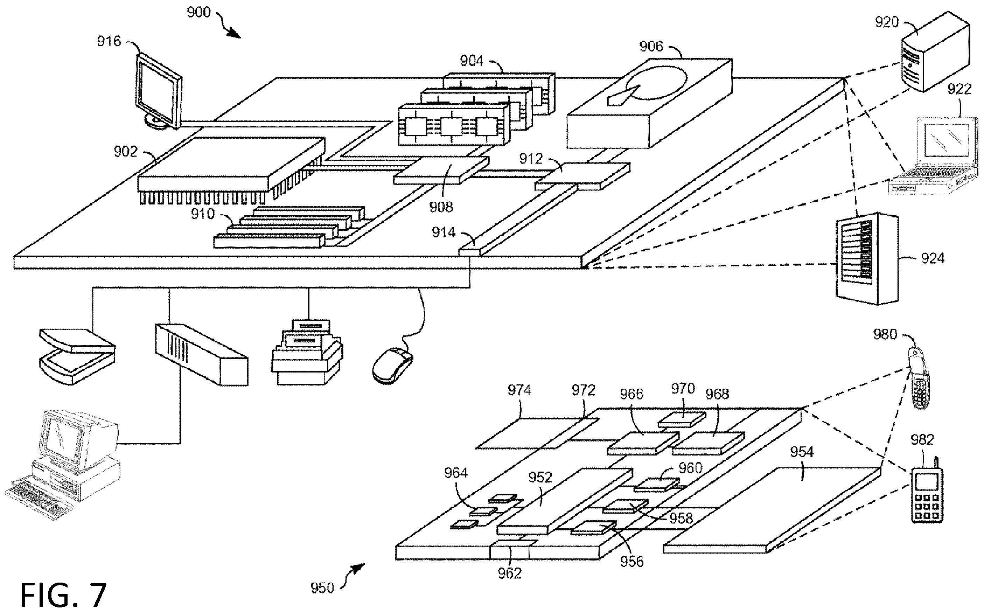

FIG. 7 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Advantageously, device 900 has a GPU adapted to process machine learning algorithms. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may be used as a GUI frontend for a user to visualize the sample composition for the user. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. The processor 902, the memory 904, the storage device 906, the high speed interface 908, the high-speed expansion ports 910 and the low speed interface 912 are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed interface 908 manages bandwidth-intensive operations for the computing device 900, while the low speed interface 912 manages lower bandwidth-intensive operations. Such allocation of functions is exemplary only. In one implementation, the high-speed interface 908 is coupled to memory 904, display 916 (e.g., through a graphics processor or accelerator), and to high-speed expansion ports 910, which may accept various expansion cards (not shown). In the implementation, low-speed interface 912 is coupled to storage device 906 and low-speed expansion bus 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as computing device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The computing device 950 may also be provided with a storage device, such as a microdrive or other device, to provide additional storage. The processor 952, the memory 964, the display 954, the communication interface 966, and the transceiver 968 are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the computing device 950, such as control of user interfaces, applications run by computing device 950, and wireless communication by computing device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of computing device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to computing device 950 through expansion interface 982, which may include, for example, a SIMM (Single In Line Memory Module) card interface. Such expansion memory may provide extra storage space for computing device 950, or may also store applications or other information for computing device 950. Specifically, expansion memory may include instructions to carry out or supplement the processes described above, and may include secure information also. Thus, for example, expansion memory may act as a security module for computing device 950, and may be programmed with instructions that permit secure use of computing device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory, or memory on processor 952, that may be received, for example, over transceiver 968 or external interface 962.

Computing device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through transceiver 968. In addition, short-range communication may occur, such as using a Bluetooth, WiFi, or other such transceiver (not shown). In addition, GPS (Global Positioning System) receiver module may provide additional navigation- and location-related wireless data to computing device 950, which may be used as appropriate by applications running on computing device 950.

Device 950 may also communicate audibly using audio codec 960, which may receive spoken information from a user and convert it to usable digital information. Audio codec 960 may likewise generate audible sound for a user, such as through a speaker, e.g., in a handset of computing device 950. Such sound may include sound from voice telephone calls, may include recorded sound (e.g., voice messages, music files, etc.) and may also include sound generated by applications operating on computing device 950.

The computing device 950 may be implemented in a number of different forms, as shown in the figure. For example, it may be implemented as a cellular telephone 980. It may also be implemented as part of a smart phone, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A method (1000) for X-ray fluorescence spectrometry of an unknown sample (202), comprising:
irradiating (1100) the sample (202) with radiation (201-rp) from an X-ray source (201), wherein the interaction between the radiation and the sample results in fluorescence lines and scattered radiation being characteristic for elements contained in said sample;
running in parallel:
performing (1220) an initial EDX measurement (E1) for said sample to obtain an initial energy dispersive spectrum (EDX1) of the sample via an EDX channel (200-1), wherein the initial energy dispersive spectrum includes fluorescence contributions and scattering contributions of said sample, and
performing (1240) an initial set (W1) of WDX measurements for said sample to obtain one or more points (WDX1-1 to WDX1-n) of an initial wavelength dispersive spectrum of the sample via a WDX channel (200-2), wherein the one or more points are points of interest for any sample;
while the initial set (W1) of WDX measurements is ongoing, determining (1260), by a computing device (100), a sample class (SC1) of the unknown sample (202) by feeding the initial energy dispersive spectrum (EDX1) as input to a first pretrained classifier (110) being trained to provide sample classes from respective EDX spectra, and deriving (1280) one or more expected elements associated with the determined sample class (SC1);
retrieving (1300), by the computing device (100), optimized WDX measurement conditions (OWC1) associated with the one or more expected elements of the determined sample class (SC1), and providing (1400) the optimized WDX measurement conditions (OWC1) to the WDX channel (200-2);
upon completion of the initial set (W1) of WDX measurements, performing (1510) a further set (W2) of WDX measurements via the WDX channel (200-2) to obtain one or more points (WDX2-1 to WDX2-m) of a further wavelength dispersive spectrum using the optimized WDX measurement conditions (OWC1) with a focus on the one or more expected elements associated with the determined sample class (SC1); and
determining (1600) a composition (C202) of said sample (202) by using the points (WDX1-1 to WDX1-n, WDX2-1 to WDX2-m) measured via the WDX channel (200-2).

2. The method of claim 1, further comprising:
performing (1520), in parallel to the further set (W2) of WDX measurements, a further EDX measurement (E2) to obtain a further energy dispersive spectrum (EDX2) of the sample via the EDX channel;
while the further set (W2) of WDX measurements is ongoing, determining (1530), by the computing device (100), a sample sub-class (SC2) of the unknown sample by feeding the further energy dispersive spectrum as input to a second pretrained classifier (111) being trained to provide sample sub-classes from respective EDX spectra, and deriving (1540) one or more further expected elements associated with the determined sample sub-class;
retrieving (1550), by the computing device (100), further optimized WDX measurement conditions (OWC2) associated with the one or more further expected elements associated with the determined sample sub-class (SC2), and providing (1560) the further optimized WDX measurement conditions to the WDX channel (200-2);
upon completion of the further set (W2) of WDX measurements, performing (1570) a still further set (W3) of WDX measurements based on the further optimized measurement conditions (OWC2) to obtain further one or more points (WDX3-1 to WDX3-k) of a still further wavelength dispersive spectrum using the further optimized WDX measurement conditions (OWC2) with a focus on the one or more further expected elements associated with the determined sample sub-class (SC2).

3. The method of claim 2, wherein the steps for determining a sample sub-class followed by retrieving further optimized WDX measurement conditions associated with one or more further expected elements associated with the determined sample sub-class, and performing a respective additional set of WDX measurements, are repeated (1580) one or more times before the determination of the composition of said sample.

4. The method of claims 1 to 3, wherein determining a composition is further making use of the measured energy dispersive spectra.

5. The method of any of the previous claims, wherein the optimized WDX measurement conditions comprise one or more parameter settings for X-ray fluorescence spectrometer components at excitation side and/or detection side of the spectrometer, selected from: collimator settings, monochromator crystal settings, detector settings and goniometer settings at the detection side, and tube settings and filter settings at the excitation side.

6. The method of any of the previous claims, wherein the pretrained classifier (110) is an encoder neural network which is part of an autoencoder neural network, wherein the autoencoder neural network has been trained unsupervised with a plurality of energy dispersive spectra as training data, and after the unsupervised training, is connected to a fully connected neural network, wherein the combination of the encoder neural network and the fully connected neural network is then trained using synthetic labeled energy dispersive spectra as training data.

7. A computer program product for determining a composition (C202) of an unknown sample (202) based on X-ray fluorescence spectrometry, the computer program comprising computer-readable instructions that, when loaded into a memory of a computing device and executed by at least one processor of the computing device, cause the computing device to execute the following steps:
receiving, in parallel, from an EDX channel (200-1), an initial energy dispersive spectrum (EDX1) of the sample obtained by an initial EDX measurement (E1), wherein
the initial energy dispersive spectrum includes fluorescence contributions and
scattering contributions of said sample, and, from a WDX channel (200-2), one or
more points (WDX1-1 to WDX1-n) of an initial wavelength dispersive spectrum of the sample obtained by an initial set (W1) of WDX measurements by, wherein the one or more points are points of interest for any sample;
before receiving a final point of the initial wavelength dispersive spectrum,
determining a sample class (SC1) of the unknown sample (202) by feeding the initial energy dispersive spectrum (EDX1) as input to a first pretrained classifier (110) being trained to provide sample classes from respective EDX spectra, and deriving one or
more expected elements associated with the determined sample class (SC1);
retrieving optimized WDX measurement conditions (OWC1) associated with the expected elements associated with the determined sample class (SC1), and providing the optimized WDX measurement conditions (OWC1) to the WDX channel (200-2);
receiving, from the WDX channel (200-2), one or more points (WDX2-1 to WDX2-m) of a further wavelength dispersive spectrum obtained by using the optimized WDX measurement conditions (OWC1) with a focus on the one or more expected elements associated with the determined sample class (SC1); and
determining the composition (C202) of said sample (202) by using the points (WDX1-1 to WDX1-n, WDX2-1 to WDX2-m) measured via the WDX channel (200-2).

8. The computer program product of claim 7, comprising further computer-readable instructions for:
before receiving a final point of the further wavelength dispersive spectrum, receiving, from the EDX channel, a further energy dispersive spectrum (EDX2) of the sample obtained by further EDX measurement (E2);
determining a sample sub-class (SC2) of the unknown sample by feeding the further energy dispersive spectrum as input to a second pretrained classifier (111) being trained to provide sample sub-classes from respective EDX spectra, and deriving one or more further expected elements associated with the determined sample sub-class;
retrieving further optimized WDX measurement conditions (OWC2) associated with one or more further expected elements associated with the determined sample sub-class (SC2), and providing the further optimized WDX measurement conditions to the WDX channel (200-2);
receiving, from the WDX channel (200-2), one or more points (WDX3-1 to WDX3-k) of a still further wavelength dispersive spectrum obtained by using the further optimized WDX measurement conditions (OWC2) with a focus on the one or more further expected elements associated with the determined sample sub-class (SC2); and
wherein determining the composition (C202) of said sample (202) also uses the one or more points (WDX3-1 to WDX3-k) of the still further wavelength dispersive spectrum.

9. The computer program product of claim 8, wherein the computer readable instructions for performing the steps specified by claim 8 are defined within a loop to be repeatedly executable for determining further sample sub-classes and determining a refined composition of said sample based on additional WDX measurements based on such further sub-classes.

10. The computer program product of any of claims 7 to 9, comprising further computer readable instructions for determining the composition by further making use of the measured energy dispersive spectra.

11. A computing device (100) adapted for determining a composition (C202) of an unknown sample (202) based on X-ray fluorescence spectrometry, comprising:
an interface adapted to receive, in parallel, from an EDX channel (200-1), an initial energy dispersive spectrum (EDX1) of the sample obtained by an initial EDX measurement (E1), wherein the initial energy dispersive spectrum includes fluorescence contributions and scattering contributions of said sample, and, from a WDX channel (200-2), one or more points (WDX1-1 to WDX1-n) of an initial wavelength dispersive spectrum of the sample obtained by an initial set (W1) of WDX measurements by, wherein the one or more points are points of interest for any sample;
a first pretrained classifier (110) being trained to provide sample classes from respective EDX spectra, the first classifier adapted to determine, based on the initial energy dispersive spectrum (EDX1) as input, a sample class (SC1) of the unknown sample (202) before a final point of the initial wavelength dispersive spectrum is received;
a WDX measurement condition retrieval module (120) adapted to derive one or more expected elements associated with the determined sample class (SC1), and to retrieve optimized WDX measurement conditions (OWC1) associated with the expected elements associated with the determined sample class (SC1), and to provide the optimized WDX measurement conditions (OWC1) to the WDX channel (200-2) via said interface;
the interface further adapted to receive, from the WDX channel (200-2), one or more points (WDX2-1 to WDX2-m) of a further wavelength dispersive spectrum obtained by using the optimized WDX measurement conditions (OWC1) with a focus on the one or more expected elements associated with the determined sample class (SC1); and
a composition module (130) adapted to determine the composition (C202) of said sample (202) by using the points (WDX1-1 to WDX1-n, WDX2-1 to WDX2-m) measured via the WDX channel (200-2).

12. The computing device of claim 11, wherein the interface is further adapted to receive, from the EDX channel, a further energy dispersive spectrum (EDX2) of the sample obtained by further EDX measurement (E2) before a final point of the further wavelength dispersive spectrum is received, the device further comprising;
a second pretrained classifier (111) being trained to provide sample sub-classes from respective EDX spectra, the second classifier adapted to determine, based on the further energy dispersive spectrum as input, a sample sub-class (SC2) of the unknown sample before a final point of the further wavelength dispersive spectrum is received;
wherein the WDX measurement condition retrieval module (120) is further adapted to derive one or more further expected elements associated with the determined sample sub-class, and to retrieve further optimized WDX measurement conditions (OWC2) associated with the one or more further expected elements associated with the determined sample sub-class (SC2), and to provide the further optimized WDX measurement conditions to the WDX channel (200-2) via said interface;
wherein the interface is further adapted to receive, from the WDX channel (200-2), one or more points (WDX3-1 to WDX3-k) of a still further wavelength dispersive spectrum obtained by using the further optimized WDX measurement conditions (OWC2) with a focus on the one or more further expected elements associated with the determined sample sub-class (SC2); and
wherein the composition module (130) is further adapted to determine the composition (C202) of said sample (202) by also using the one or more points (WDX3-1 to WDX3-k) of the still further wavelength dispersive spectrum.

13. The computing device of any of claims 11 or 12, wherein the composition module (130) is further adapted to determine the composition by further making use of the measured energy dispersive spectra.

14. The computing device of any of claims 12 to 13, wherein the first pretrained classifier (110) and the second pretrained classifier (111) are implemented within a single classifier.

15. The computing device of any of claims 11 to 14, wherein the pretrained classifier (110) is an encoder neural network which is part of an autoencoder neural network, wherein the autoencoder neural network has been trained unsupervised with a plurality of energy dispersive spectra as training data, and after the unsupervised training, is connected to a fully connected neural network, wherein the combination of the encoder neural network and the fully connected neural network is then trained using synthetic labeled energy dispersive spectra as training data, wherein the labels correspond to respective sample classes or sample sub-classes associated with the respective energy dispersive spectrum.

16. The computing device of any of claims 11 to 15, wherein the WDX measurement condition retrieval module (120) is further adapted to retrieve optimized evaluation settings (EOS) associated with the determined sample class (SC1), and wherein the composition module (130) is further adapted to determine the composition (C202) of said sample (202) by using the optimized evaluation settings (EOS).
